# EUROPEAN PATENT APPLICATION

(11) **EP 3 879 156 A1**
(43) Date of publication of application: **15.09.2021**
(21) Application number: 19882407.0
(22) Date of filing: 11.11.2019
(51) Int. Cl.: F16L 19/02, F16L 19/03

(54) **UNIVERSAL COUPLERS FOR HYDRAULIC HOSES**

(30) Priority: 09.11.2018 CO 18012114
(71) Applicant: Salazar Alzate, Jesus Walter, Medellin (CO)
(72) Inventor: Salazar Alzate, Jesus Walter, Medellin (CO)
(74) Representative: Clarke Modet & Co.
(86) International application number: PCT/IB2019/059648
(87) International publication number: WO 2020/095279

(57) **Abstract**

The present invention discloses a universal coupling (1) for hydraulic hose wherein said coupling (1) comprises a male coupling (2) which is constituted by a shank (2.1) and a universal male part (3); and a female coupling (4) comprising a universal nut (4.1) compatible with the universal male coupling (3) and wherein said universal nut (4.1) has an internal universal thread (4.2) and a turning up to the middle of the part in its external part by means of which it is tightened to a piece (4.4) comprising two ends or tips, where, the first tip has a turning (4.5) and an external grooved element (4.6) forming between them a box housing the nut (4.1) and the second tip has a terminal head (4.9) of standard and variable shape, where the terminal head (4.9) joins the first tip through a segment (4.8).

## Description

### FIELD OF THE INVENTION

The technological field of the present invention relates to hydraulic products for fluid conduction, specifically couplings for joining hydraulic hoses at their ends to different equipment and machines including moving arms and parts.

### SUMMARY OF THE INVENTION

The present invention discloses a universal coupling (1) for hydraulic hose wherein said coupling (1) comprises a male coupling (2) which is constituted by a shank (2.1) and a universal male part (3); and a female coupling (4) comprising a universal nut (4.1) compatible with the universal male coupling (3) and wherein said universal nut (4.1) has an internal universal thread (4.2) and a turning up to the middle of the part in its external part by means of which it is tightened to a piece (4.4) comprising two ends or tips, where, the first tip has a turning (4.5) and an external grooved element (4.6) forming between them a box housing the nut (4.1) and the second tip has a terminal head (4.9) of standard and variable shape, where the terminal head (4.9) joins the first tip through a segment (4.8).

### STATE OF THE ART

Much of the industrial, mining and construction machinery, especially heavy machinery (yellow), has hydraulic systems for the movement of arms and operable parts for their different functions. These have high pressure (hydraulic) hoses that at their ends have connections (couplings) having various specifications of diameter in their thread and shape, according to different international standards within which there are American, English, German standards. and Japanese, among others. One of the main problems in these machines is the deterioration and breakage of the hoses, given the harsh working conditions to which they are subjected, it is necessary to replace said part, presenting the inconvenience that; for its replacement, it is imperative to have a wide knowledge of the different standards that the connectors (couplings) comply with, being necessary to disassemble the hose and send it for its manufacture according to the sample, presenting inconveniences and delays due to its repair and the start-up of the machine, because, in many cases, it is located in remote places from urban centers that manufacture hoses with couplings according to the sample removed from the machine, causing loss of time and money due to inactivity and non-production of the machines while the hose is removed, taken to the urban area, manufactured and returned to the area where the machine is non-functional.

Related concepts for water systems are known in the state of the art, for example, in patent EP2264349, which is directed to a universal quick coupling device to connect a pipe on the side of the wall from a water supply network and an apparatus dispenser, typically a tap or similar device, wherein the device comprises a body mounted at one end with a thread for connecting to said tube which is provided with a shutter and a quick coupling mechanism. A second body or joint/coupling connectable to the first one through a quick coupling mechanism acting as an actuator and is equipped with a side outlet accessory/fitting for a hydraulic connection together with a filter that receives water from the supply network. However, this document discloses a shutter/gate-type device to cover a water pipe at one end, which does not work with high pressures.

On the other hand, document TW201730467 is known, disclosing universal short head connectors for American and French valves including a head part, a rotating column, a pressure filling member, a compression ring and a push pin unit, wherein one end of the head portion is inwardly extended with a settling chamber. One side of the head portion is inwardly extended with a through hole communicating with the settling chamber. The rotating column is arranged in the settling chamber for a rotation *in situ* acted upon by an external force. The rotating column is internally provided with a hollow chamber. An outer peripheral surface of the rotatable column is formed, through a radial recess, with an opening, and the opening is in communication with the hollow chamber. The rotating column is provided with a stopper part at one end of the opening. One end of the rotating column is provided with an air guide hole and the air guide hole is in communication with the hollow chamber. The rotating column can rotate between an inactive position and an active position with an external force acting on it. However, this device is aimed at valves that do not have high pressure hoses associated with them.

Patent CN10582263 is also known, which refers to a universal connector for filtering oil from a hydraulic mechanism that comprises a "T"-shaped joint, wherein said joint is connected with a first connector body and a second connector body through threads; wherein the first connector body is connected with a connection piece A; the second connector body is connected with a connection piece B; and a third connector body is connected to a connection piece C through threads; a fixing tank. The universal connector disclosed by this prior-art having application to filter oil from a hydraulic mechanism and has the advantage of being reasonable in design, size, low in cost, convenient to install and use with high working efficiency, safety, reliability and resistance to high temperatures and corrosion. In addition, the connector has long service life, and wide application range. However, this document does not teach that the connector is an adapter for hose joints for hydraulic equipment or machines with movement in components by means of high pressure oil in hoses that support high pressures.

For its part, patent US2016021823 discloses a system and method to removably secure an accessory to a zero-turn vehicle, such as a lawn mower. The system includes a mounting assembly provided on a hydraulically-operated support member on the vehicle frame; and a connector assembly provided in the accessory. The mounting assembly includes a pivoting plate member that is inserted into the complementary shaped connector assembly. The plate member includes a locking rod at an upper end and the connector assembly has side walls and a top wall that surrounds the plate member when the mounting assembly is engaged with the connector assembly. The upper wall protrudes and captures the locking rod between the upper wall and the rear wall of the accessory and by means of a locking mechanism, the mounting assembly and the connector assembly are secured and the movement of the joints/couplings is achieved by actuating the hydraulic system in the vehicle. However, this prior-art is related to securing mechanisms through universal mounting arrangements in domestic-use and/or low pressure devices or vehicles.

In this regard, it is clear that there is a need not yet satisfied in the state of the art, specifically in the field of vehicles and machinery having systems which are operated by means of hydraulic hoses having a great variety of connections with many types of forms and standards; need of a universal connector for hydraulic hoses that, through a set of couplings (male and female) provide a hermetic seal for a quick and easy assembly, and that can then be adapted to any connector with shape and/or standard (FYN) specified without requiring of specific knowledge of the operator in terms of forms and standards of the couplings that equip from the factory the hydraulic machines.

### DESCRIPTION OF THE FIGURES

Figure 1 corresponds to an exploded view of the universal coupling (1) according to the present invention both in its external part and in the internal part according to the longitudinal axis AA shown for the coupling parts (1).
Figure 2 shows the shape of the male part (2) of the universal coupling (1) according to the present invention.
Figure 3 shows the female part (4) of the universal coupling (1) according to the present invention before being joined by pressure (stamped).
Figure 3A shows the female part (4) of the universal coupling (1) of figure 3 after parts 4.1 and 4.4 have been joined (stamped).
Figure 4 shows the different shapes that the segment (4.8), which joins the universal nut (4.1) and the threaded terminal head (4.9) with a determined standard and shape (NYF), can have.
Figure 5 shows some exemplified shapes of the threaded end head (4.9) that can be adapted to the segment (4.8).

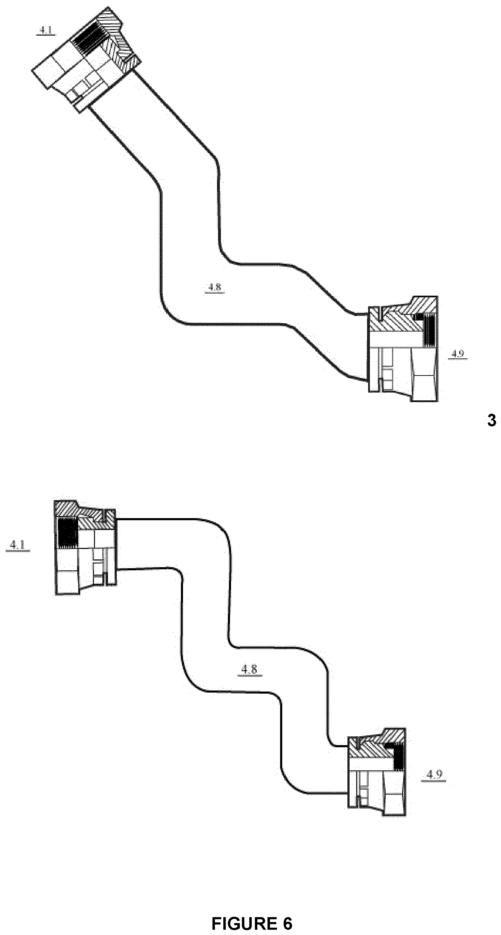

Figure 6 shows some configuration examples of the segment (4.8) depending on the length and shape of the area where the coupling (1) and the hose (M) having the male universal couplings (3) at its ends of the invention.
Figure 7 shows an example of a kit of elements that make up a universal connector (1) according to the invention.

### BRIEF DESCRIPTION OF THE INVENTION

One aspect of the invention is directed to a device comprising a set of couplings for hydraulic hose (M) consisting of a universal male coupling (3) and a universal female coupling (4), wherein, the universal female coupling (4) consists of two ends: the first end of the coupling (4) is a universal female or nut (4.1) compatible with the universal male coupling (3) and the second end is a terminal head (4.9) that can have a standard and variable shape according to the need and factory specifications of the original coupling of the machine, being understood as the standard and shape the configuration of threading and union of each terminal head (4.9) depending on each hydraulic machine manufacturer.

Additionally, the present invention comprises a kit of coupling elements for hydraulic machinery, comprising the following parts: a hydraulic hose (M) with universal male couplings (3) at both ends, which receive a first universal element or nut (4.1) of the universal female coupling (4) by screwing them together, making a leak-free union through the contact of the negative cone (4.7) located on the inside of the female nut (4.1) and the positive cone (3.4) of the coupling male (3) and where the second element (4.8) and (4.9) of the universal female coupling (4) can have any shape and standard that allows it to be coupled to all types of machine, where each female (4) has as second element (4.8) and (4.9) different shapes and standards of unions/joints or couplings for hydraulic machines.

The inventions also cover an universal coupling (1) for hydraulic hose wherein the coupling (1) comprises a male coupling (2) having a shank (2.1) and a universal male part (3); and a female coupling (4) comprising a universal nut (4.1) compatible with the universal male coupling (3) and wherein said universal nut (4.1) has an internal universal thread (4.2) and a turning up to the middle of the part in its external part by means of which it is tightened to a piece (4.4) comprising two ends or tips, where, the first tip has a turning (4.5) and an external grooved element (4.6) forming between them a box housing the nut (4.1) and the second tip has a terminal head (4.9) of standard and variable shape, where the terminal head (4.9) joins the first tip having the turning (4.5) and the grooved element (4.6) through a segment (4.8).

### DETAILED DESCRIPTION OF THE INVENTION

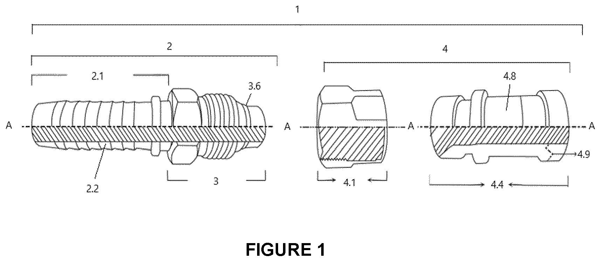

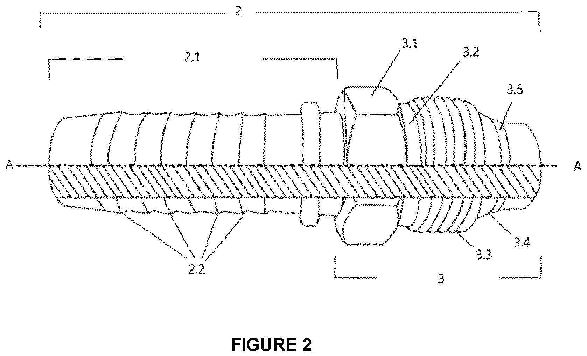

Referring to figure 1, this shows an exploded view of the universal coupling (1) according to the invention, where the male (2) is shown, which is constituted by a shank/rod (2.1). This first tip or shank (2.1) (or fitting) is comprised by a configuration in the style of "fish bones" or "circumferential grooves" (2.2), which improve the grip of the male coupling (2) on this part to the hose (M). The second tip of the male (2) as illustrated in figure 2, is the universal male part (3) that consists of a hexagon (3.1), an external circumferential groove (3.2) and an external thread (3.3) followed by a positive cone (3.4), funnel-shaped, where said positive cone (3.4) has a groove (3.5) between the minor diameter and major diameter of said cone (3.4), where a nitrile gasket (O-ring) (3.6) for an optimal sealing, is housed, which is followed by the turning/cylinder part of the positive cone (3.4), which fulfills the function of flaring the universal nut (4.1) of the female coupling (4) with the universal male part/coupling (3).

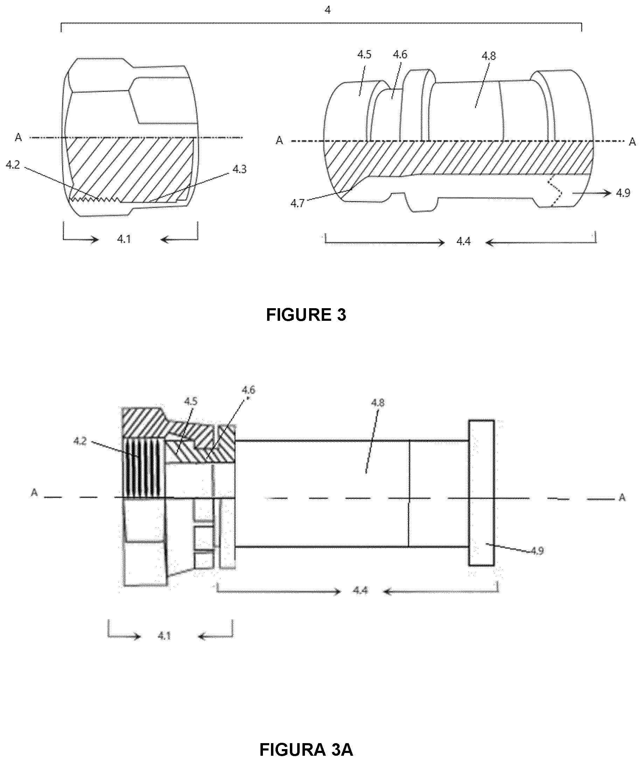

The female (4), as shown in figure 3 and 3A, is comprised of a first element or universal nut (4.1) which, on the outside, has a hexagonal shape (called nut) and a cylinder capacity up to the middle of the part in its external part, by means of which the part (4.4) is tightened (stamped). Additionally, the universal nut (4.1) has an internal universal thread (4.2) and a smooth circumferential box (4.3) through which the universal nut (4.1) can be stamped (tightened) to the grooved element (4.6) of the piece (4.4) as shown in figure 3, allowing the assembly (4.1) - (4.4) to be rotatable for easy assembly. The stamped is carried out between the smooth circumferential box (4.3) of the universal nut part (4.1) and the grooved element (4.6) of the first tip of the part (4.4).

In this sense, the piece (4.4) of the female part (4) consists of two ends or tips. The first tip of the piece (4.4) has a turning/cylinder element (4.5) and an outer grooved element (4.6) that form a box between them which houses the stamped nut (4.1) and allows both pieces (4.1) and (4.4) to be rotatable. As illustrated in figure 3, on the inner longitudinal axis AA, just inside the turning part (4.5) a negative cone (4.7) is housed in which the universal male (3) fits through its positive cone (3.4) that performs the hermetic seal after the universal male parts (3) and the female parts (4) are screwed together.

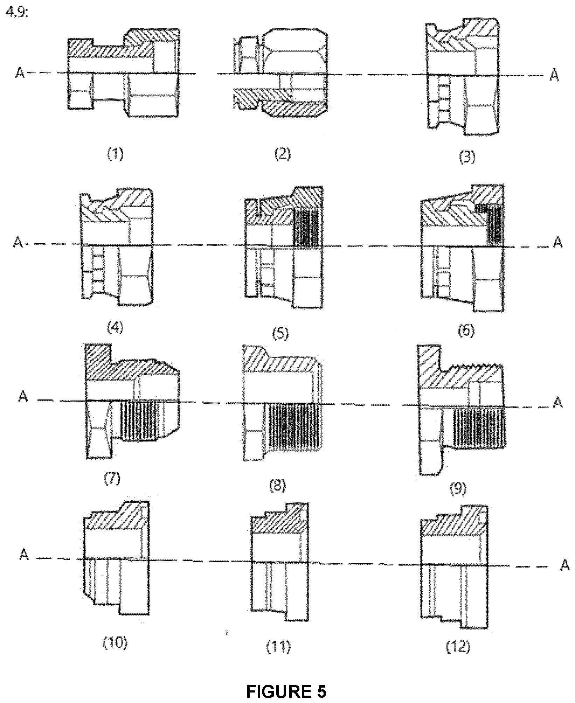

The second element of the part (4.4) is a segment (4.8) which has at its opposite end the turning part (4.5), a terminal head (4.9) that corresponds to any connector with a specific shape and/or standard, for example, but not limited to the following references, which are also illustrated in Figure 5:

| Head-terminal (4.9) | Description |
|---|---|
| 1 | "O" ring Fae seal (female) |
| 2 | Joint industry council (JIC 8wire nut) (female) |
| 3 | National Pipe straight Mechanical (NPSM) (female) |
| 4 | British Standard Pipe Parallel (BSPP) (female) |
| 5 | Metric Japanese Industrial Standard (Komatsu) (female) |
| 6 | Metric "DKL" light senes (female) |
| 7 | Metric Japanese Industrial Standard (Male) |
| 8 | National Pipe fuel (NPTF) (Male) |
| 9 | Metric "DKL" light series (Male) |
| 10 | Caterpillar Type Flange |
| 11 | Code 61 Flange -SAE J518 |
| 12 | Code 62 SAE J518 |

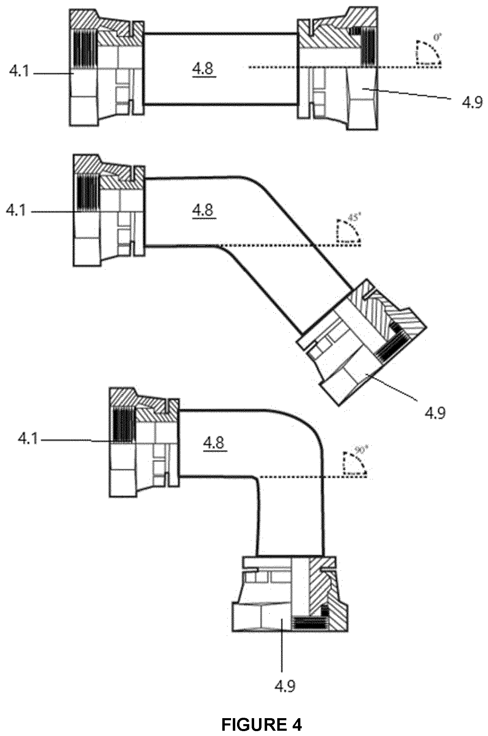

In this sense, the segment (4.8) of the part (4.4) can be a segment of any length, for example, but not limited to a length between 0.5 cm and 10.000 cm, preferably between 0.5 cm and 1.000 cm. In addition, as shown in figure 4, the segment (4.8) can be a straight segment or it can be curved with one or more angles between 0 ° and 360 °, for example, but not limited to, angles of 30°, 45°, 90°, etc.

In addition, it is understood from the description of the present invention that the universal coupling (1) can have any suitable and employed internal diameter, for example, but not limited to diameters from 0.05 cm to 16 cm (0.019 inches to 6.299 inches). for example, 1/8 inch (0.05 cm), 3 inches (7.62 cm), etc.

The material of the universal coupling (1) can be, but is not limited to, steel and stainless steel.

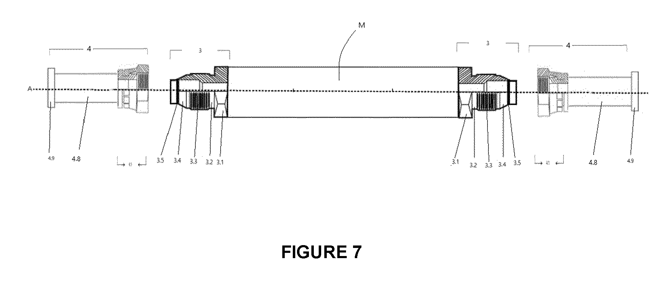

According to the present invention, it is also considered part thereof, the kit of elements, which consists of a special hose (M) for high pressure, which has universal connectors (1) at its ends according to the invention, mainly the male couplings/connector (2) as illustrated in figure 7 and a set of females couplings (4) with different terminal heads (4.9) and segments (4.8) ready to replace a damaged or fault hose (M) in a machine. The hose (M) may be, but is not limited to, a hose having an oil-resistant synthetic rubber inner tube, a steel reinforcement element as an interlayer, and an abrasion and weather resistant synthetic rubber outer liner, for hydraulic fluid and / or lubricating oil applications between temperatures ranging from -40 °C to 200 °C. The person skilled in the art will understand that any type of high pressure hose with characteristics different from those indicated above may be suitable for the kit of elements of the invention.

In this sense, the technical advantages offered by the solution provided by the present invention are evident since the universal coupling (1) and the kit of elements allow to reduce the Time and costs of repair and maintenance of machines with a device for movement through hydraulic hoses, since it is not required to previously disassemble the hose to obtain the sample to manufacture the replacement of the hose considering the standard and shape specifications of the connectors and therefore, technical knowledge is not required in the standards and shapes of said connectors since, once the segments (4.8) according to the invention have been installed, on the side of the terminal head (4.9) that has the standard dimensions and reference shape identified for the machine, it is only necessary to install the hose (M) by means of the universal male parts (3) that are screwed to the universal nut (4.1) of the female (4) that remains attached to the machine system through said end head (4.9).

## Claims

1. A universal coupling (1) for hydraulic hose wherein said coupling (1) comprises a male coupling (2) which is constituted by a shank (2.1) and a universal male part (3); and a female coupling (4) comprising a universal nut (4.1) compatible with the universal male coupling (3) and wherein said universal nut (4.1) has an internal universal thread (4.2) and a turning up to the middle of the part in its external part by means of which it is tightened to a piece (4.4) comprising two ends or tips, where, the first tip has a turning (4.5) and an external grooved element (4.6) forming between them a box housing the nut (4.1) and the second tip has a terminal head (4.9) of standard and variable shape, where the terminal head (4.9) joins the first tip having the turning (4.5) and the grooved element (4.6) through a segment (4.8).

2. The universal coupling (1) for hydraulic hose according to claim 1, wherein the shank (2.1) has circumferential grooves (2.2) and the universal male part (3) has a hexagon (3.1), an external circumferential groove (3.2) and an external thread (3.3) followed by a positive cone (3.4) in the shape of a funnel.

3. The universal coupling (1) for hydraulic hose according to claim 2, wherein said positive cone (3.4) has a groove(3.5) between the minor diameter and major diameter of said cone (3.4), where a gasket is housed (3.6).

4. The universal coupling (1) for hydraulic hose according to claim 1, wherein the segment (4.8) is a straight segment.

5. The universal coupling (1) for hydraulic hose according to claim 1, wherein the segment (4.8) is a curved segment with one or more angles between 0 and 360 °.

6. The universal coupling (1) for hydraulic hose according to claim 1, wherein the internal diameter of the coupling is from 0.05 cm to 16 cm.

7. A universal coupling device (1) comprising a set of couplings for hydraulic hose (M) having a universal male coupling (3) and a universal female coupling (4), wherein the universal female coupling (4) is double-ended: the first end of the female coupling (4) is a universal nut (4.1) compatible with the universal male coupling (3) and the second end is a terminal head (4.9) with standard and variable shape.

8. A kit of coupling elements comprising a hydraulic hose (M) with universal male couplings (3) at both ends, receiving a threaded nut (first element) (4.1) from a set of female coupling (4) where each one of them has a different shape and standard in its terminal head (second element) (4.9), suitable for any type of machine.
